(19) Europäisches Patentamt
European Patent Office
Office européen des brevets

(11) Publication number: 0 173 517 A2

(12) # EUROPEAN PATENT APPLICATION

(21) Application number: 85305811.3

(22) Date of filing: 15.08.85

(51) Int. Cl.[4]: C 08 F 251/00

(30) Priority: 21.08.84 DE 3430676

(43) Date of publication of application: 05.03.86 Bulletin 86/10

(84) Designated Contracting States: BE DE FR GB IT NL SE

(71) Applicant: CPC INTERNATIONAL INC., International Plaza P.O. Box 8000, Englewood Cliffs New Jersey 07632 (US)

(72) Inventor: Kniewske, Reinhard, Dr., Kaempstrasse 15, D-4190 Kleve-Donsbrüggen (DE)
Inventor: Krause, Frank, Dr., Nielerstrasse 82, D-4190 Kleve-Keeken (DE)

(74) Representative: Wilkinson, Stephen John et al, c/o Stevens, Hewlett & Perkins 5 Quality Court Chancery Lane, London WC2A 1HZ (GB)

(54) **Process for producing essentially homopolymer-free saccharide graft polymers and saccharide graft polymers obtainable thereby.**

(57) Essentially homopolymer-free saccharide graft polymers with a saccharide backbone of at least two alpha-glucosidically linked saccharide units are produced according to the process of this invention by initiating the decomposition of a maltosaccharide covalently linked to a group containing an azo-radical or diazo-radical and splitting off $N_2$, in the presence of at least one ethylenically unsaturated compound to be grafted, so as to yield radicals (maltosaccharide polymerization initiator radicals) which trigger a graft polymerization reaction resulting in saccharide graft polymers having graft branches covalently bound to the maltosaccharide moiety.

EP 0 173 517 A2

The invention relates to a process for producing saccharide graft polymers which are essentially free from homopolymer by radical polymerization and to saccharide graft polymers obtainable thereby which feature graft branches covalently bound to the saccharide backbone.

Di-, oligo- and in particular higher polymeric carbohydrates (saccharides) like, primarily, cellulose, starch and their degradation products are natural polymers available in ample amounts with manifold properties, which have for a long time already been widely used for the most different purposes.

A natural interest has nevertheless been maintained in extending their uses by combining them with synthetic polymers. Efforts in this respect included the testing of mixtures as well as, in particular, the performing of trials of the most different kind for the manufacture of carbohydrates grafted with synthetic polymers (saccharide graft polymers). The success of these efforts was limited, though, inasmuch as nearly all of the numerous processes proposed either failed completely or yielded genuine saccharide graft polymers only in an incomplete way and instead led to more or less undefined mixtures of synthetic polymers (homopolymer), ungrafted saccharide and genuine saccharide graft polymer. This holds true in particular for the large number of known processes for grafting poly-saccharides, in particular starch, by radical graft copolymerization with ethylenically unsaturated mono- or oligomers. Regardless of whether the polymerization initiator radical was then obtained by chain transfer by means of per- and azo-compounds or redox systems, physical activation by X-rays or $\gamma$-rays, or by mechanical strain or chemical activation, e.g. by metal ions such as $Ce^{4+}$, $V^{5+}$ or $Mn^{3+}$, this process led to the undesired secondary reaction of homo- or copolymerization of the monomer(s) used. In the case of grafting by transfer reactions homopolymerization even prevailed, while in the case of initiation by rays the simultaneous irradiation of polysaccharide and monomer(s) led to strongly cross-linked products which in the case of chemical activation in addition became charged with heavy metals.

Another disadvantage of these known processes must be seen in the fact that the manufacture of "tailor-made" graft polymers, i.e. a selective influencing of the number of graft sites per backbone molecule and/or the chain lengths or graft branches, is not or at most insufficiently possible with them.

Although experts have for decades been conscious of these problems and have searched for a solution, which already in the early 1960s led to the seemingly simple and convincing proposal to graft the chemically fairly stable cellulose using certain diazonium derivatives of this carbohydrate as graft polymerization initiators (Journal of Applied Polymer Science, Vol. V, p. 553-557 [1961]), a satisfactory, generally applicable and practicable solution of this problem has never been found. The same can be said of the process known from U.S. Patent No. 3.455.853 which is claimed to be generally applicable to polysaccharides and is based in principle on the proposal to use as homopolymerization initiators polysaccharide derivatives having azo compounds ionically bound to carboxyl groups of the carbohydrate to be grafted, which are activated in the manner known to decompose splitting off nitrogen, so as to yield radical groups ionically bound to the polysaccharide which initiate the polymerization of monomers leading to saccharide graft polymers with graft branches ionically linked to the saccharide backbone which while being largely free from homopolymers still fail to be satisfactory inasmuch as the linkage fo the graft branches is rather instable.

It is an object of this invention, therefore, to provide a process of the above kind which overcomes the disadvantages of the start of the art and, in particular, makes it possible to use maltosaccharides, which are sensitive compared to cellulose, with alpha-glucosidically bound saccharide units, to employ for grafting a broad spectrum of monomers and/or oligomers, to produce homopolymer-free graft polymers with covalently bound graft branches, optionally to obtain high grafting degrees, i.e. products with a high proportion of grafted synthetic polymers, to carry out grafting step by step and/or produce saccharide graft polymers whose saccharide backbone can be chemically modified.

BAD ORIGINAL

Accordingly, the invention comprises a process for producing an essentially homopolymer-free saccharide graft polymer by radical polymerisation of an ethylenically unsaturated compound in the presence of at least one saccharide and at least one initiator which under polymerisation conditions is adapted to decompose to split off nitrogen so forming a radical which initiates the polymerisation, characterised in that the saccharide is a maltosaccharide covalently linked to a group containing an azo-radical or a diazo radical which under the polymerisation conditions eliminates nitrogen to form a free radical which initiates the polymerisation and to which becomes attached an ethylenically unsaturated compound polymer chain.

The maltosaccharide which is covalently linked to a group containing an azo-radical may have the general formula

$$MS - R - NX \quad (I)$$

in which

MS means an optionally substituted and/or hydrogenated maltosaccharide group featuring at least two alpha-glucosidically linked saccharide units in the molecule,

R means a covalent single bond or a bivalent group of the general formula

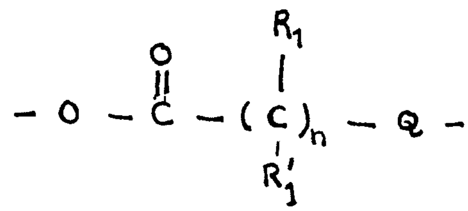

(II a),

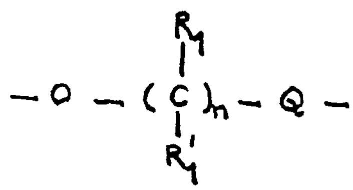

(II b)

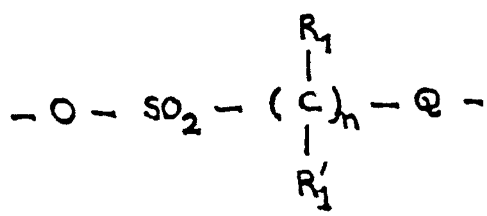

(II c),

in which

n is an integer from 0 to 17, $R_1$ and $R_2$ are the same or different, standing for H or a $C_{1-5}$-alkyl group or a phenyl group optionally substituted with Cl, F, Br, -CN, $-SO_3H$ or $-NO_2$, and Q is a bivalent group of the formula

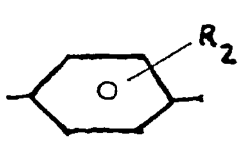 , 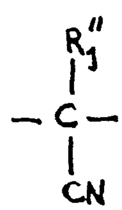 , 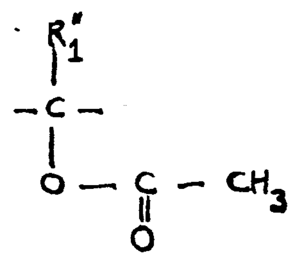 ,

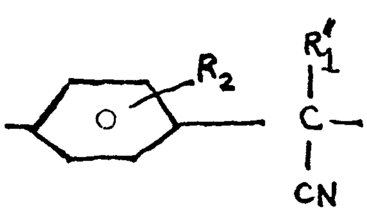 or 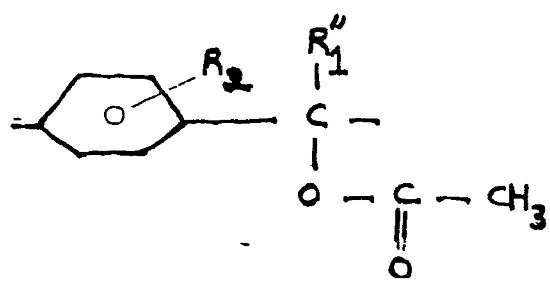

in which $R''_1$ may have one of the meanings given for $R_1$ and

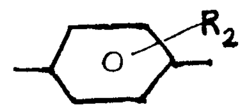

is a phenylene group optionally substituted with F, Cl, Br, -CN, $-SO_3H$ or $-NO_2$,

or the formula

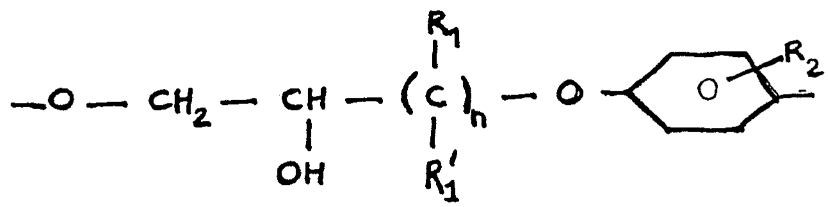

(II d),

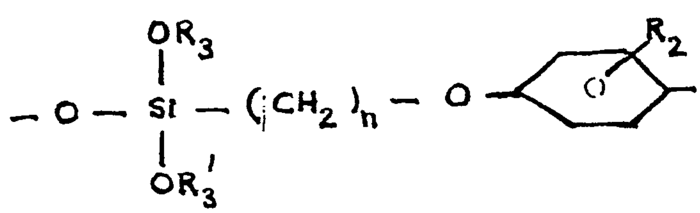

(II $e_1$)

or

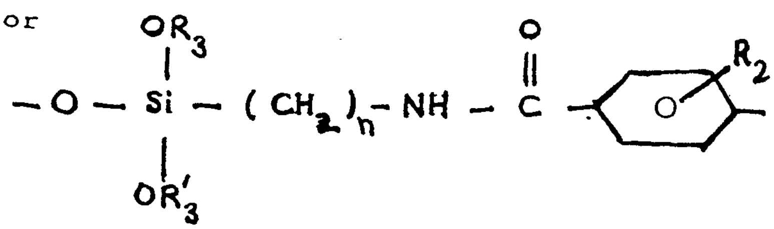

(II $e_2$),

in which $R_3$ and $R'_3$ are the same or different and mean a methyl or ethyl group,

or

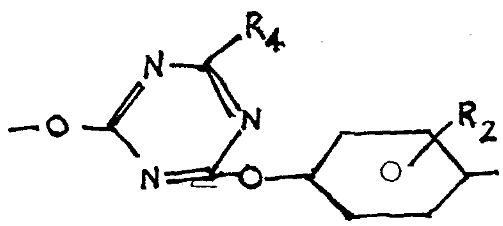

(II $f_1$)

or

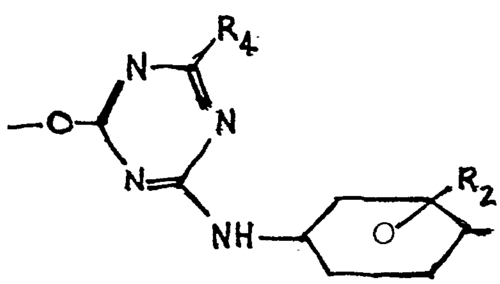

(II $f_2$),

in which $R_4$ stands for - $NHCH_2COOH$, $-OCH_2COOH$, -Cl, -F, -Br, $-NH_2$, - $NHCH_3$, $-N(C_2H_5O)_2$, 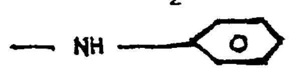 , - $OCH_3$, $-N(CH_3)CH_2CH_2OH$, - $N(CH_2CHOHCH_3)_2$, -N $(C_2H_5)_2$,

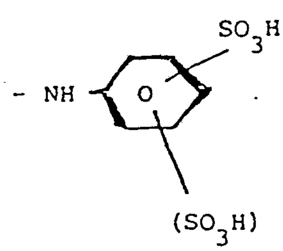

or a morpholine group,

N is a nitrogen atom

and

X stands for $\equiv N^+$ or a group of the formula

$$=N-R'-Ms' \qquad (III).$$

in which R' and Ms' may be the same as or different from R and Ms respectively and may have one of the meanings given above for these groups,

or a group of the formula

= N - OZ (IV),

in which Z stands for H or a cationic counterion,

or

X together with R and N forms a heterocyclic group of the general formula

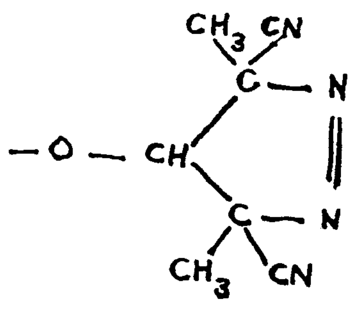

(V)

BAD ORIGINAL

In the foregoing formulae the phenyl groups may be replaced by polycyclic e.g. naphthyl groups in which linkage or substitution may be in the same of different rings.

Maltosaccharides suitable as starting materials are, as already indicated, any, optionally substituted, oligo- and polysaccharides featuring two or more alpha-glucosidically linked saccharide units. Preferable are starches and starch fractions, such as amylose and amylopectin, in both native (granular and ungelatinized) and gelatinized and/or chemically modified form, expecially starch products obtainable by thermal, enzymatic, catalytic and/or oxidative degradation, as well as starch derivatives obtainable by etherification and/or esterification.

Thus the maltosaccharide may be derived from an oxidized and/or methyl-, ethyl-, hydroxymethyl-, hydroxyethyl-, hydroxypropyl-, carboxymethyl and/or acetyl-substituted maltosaccharide, preferably from a starch modified in this manner or from its degradation product.

The process of the invention surprisingly gives high graft yields even when using maltosaccharides of formula I with a low degree of substitution. Another advantageous aspect of using maltosaccharides as backbone is the possibility to modify the graft polymers enzymatically, in particular with beta- or gluco-amylases starting from the reducing end to obtain graft polymers featuring synthetic graft branches as terminal groups or to split with alpha- amylases Besides, the reducing terminal groups can be substituted in such a manner that other monomers are polymerized onto these terminals.

The general principle of producing maltosaccharide derivatives of formula I and their conversion into polymerization initiation radicals comprises substituting maltosaccharides, which may optionally be substituted and/or hydrogenated, with azo-compounds or amino compounds and converting these covalently bound substituents into azo or diazonium groups which decompose into the radical which triggers the polymerization with nitrogen being split off in the process:

1. <u>Decomposition of azo compounds of formula I</u>

$$Ms - R - N = N - R' - Ms' \longrightarrow Ms - R\cdot + N_2 + \cdot R' - Ms'$$

The compounds of formula I can be obtained without any trouble in different ways, viz.

BAD ORIGINAL

a) - by reaction of aldehyde or keto groups of the maltosaccharide (reducing terminal groups, aldehyde or dialdehyde derivative, keto derivative) with hydrazine to obtain an azine derivative

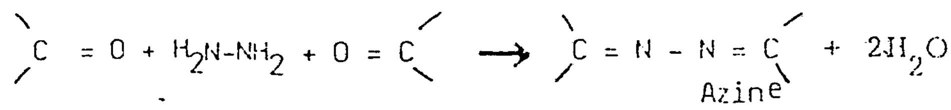


(linkage intra- or intermolecular)

- by reaction of the azine derivative with hydrocyanic acid

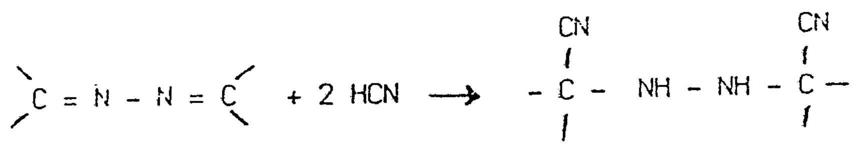

and

- by oxidation with bromine to obtain the azo compound

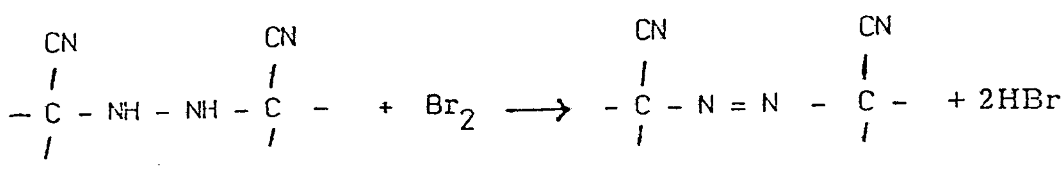

b) by chemical reaction of azo isobutyronitrile derivatives with maltosaccharides

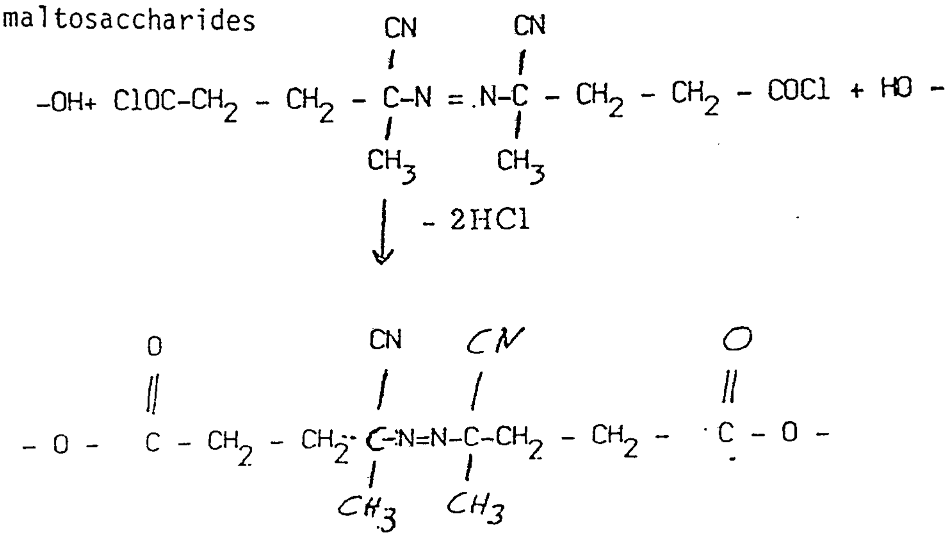


As shown above, the chemical linkage may be intra- or intermolecular.

BAD ORIGINAL

When proceeding according to method a) using maltosaccharides not substituted with aldehyde or keto groups, the linkage via azo groups can only be accomplished at the keto or aldehyde groups of the free terminals of the maltosaccharides so that maltosaccharide derivatives of formula I are obtained which may be employed for producing block copolymers. Decomposition of the azo-compounds may take place either in polar or in non-polar media, e.g.

in aqueous medium,

in organic media or mixtures like, inter alia, liquid monomers (mixtures),

and in organic/aqueous mixtures,

and is triggered by charging with energy supplied by thermal, photochemical and/or catalytic means. Resulting are only radicals which are chemically (via covalent bonds) bound to the maltosaccharide. Even where the $NH_2$ groups of the hydrazine are not all completely converted, no free radicals are formed.

As explained under b) above, there is yet another possibility of producing azo compounds for formula I. It comprises fixing low-molecular-weight azo compounds having two functional terminal groups to the hydroxyl groups of a maltosaccharide or to functional substituents of substituted maltosaccharides through covalent bonds. Incomplete conversion of the two functional groups may, however, lead to homopolymerization by radicals which are not covalently bound to the maltosaccharide.

BAD ORIGINAL

2. Decomposition of diazonium salts of formula I

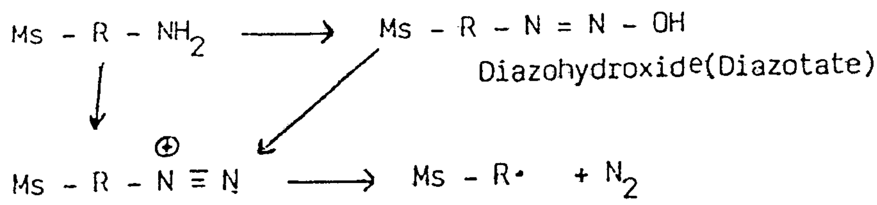


In the presence of one or several monomers polymerization at the maltosaccharide is started:

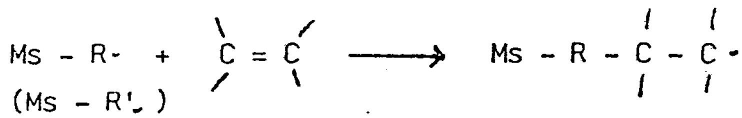

Diazonium salts of formula I are generally obtainable by diazotizing maltosaccharide derivatives with diazotizable amino groups obtained, e.g., according to the process know from U.S. Patent No. 3620 913, either with nitrous acid in the aqueous medium or with nitrous esters in aqueous and/or organic (slightly polar or non-polar) media.

It is also possible and may sometimes be of advantage to proceed by first producing intermediates, viz. diazohydroxides of diazotates of formula I (in which X stands for = N-OZ), which are relatively stable compounds convertible by acidification into the corresponding easily decomposable diazonium salts.

Decomposition of the diazonium salts may be initiated thermally, chemically, photochemically and/or catalytically; it leads exclusively to radicals which are chemically bound to the maltosaccharide moiety.

Starting compounds suitable for the formation of maltosaccharide derivatives of formula I are in particular the following derivatives of optionally substituted and/or hydrogenated maltosaccharides:

a) aliphatic and/or aromatic azo compounds which are bifunctionally bound to the maltosaccharide via ester groups, ether groups or carbon-carbon bonds;

b) diazotizable arylamino, alkarylamino, aralkylamino, alkylamino compounds which are covalently bound to the maltosaccharide via ester groups, ether groups, azomethine groups, secondary amino groups or sulfonic acid groups. The aromatic substituents may also be heterocyclic compounds.

As already mentioned, the maltosaccharide derivatives of formula I are thermally, photochemically and/or catalytically converted into $N_2$ and maltosaccharide polymerization initiator radicals in the presence of at least part of the mono- and/or oligomer(s) to be grafted. Graft polymerization may be carried out continuously or batchwise in solution, suspension, emulsion or substance. It may be performed in the presence of emulsifiers and/or regulators to influence the chain lengths of the graft branches. As monomers which according to the process of this invention can be reacted with maltosaccharide derivatives of formula I it is possible to use ethylenically unsaturated compounds which in the presence of a system initiating homo- or copolymerization can easily be homopolymerized or copolymerized with other ethylenically unsaturated compounds in solution, suspension, emulsion or substance. A monomer is understood to be an ethylenically unsaturated compound of the structure

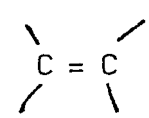

which comprises vinyl monomers, vinylidene monomers, also monomers in which all four free valences are saturated by moieties, as well as monomers in which at least two moieties linked to one and the same carbon atom form a ring. Such monomers generally include the following compounds:

BAD ORIGINAL

Olefinic and diolefinic hydrocarbons like

ethylene, butene-1, butene-2, isobutylene, butadiene, pentene-1, isopentene, pentadiene, isoprene, hexene, isohexene, cyclohexene, 4-vinyl cyclohexene, isopentadiene, heptadiene, octene, isooctene, nonene, decene, undecene, dodecene, tetradecene, hexadecene, octadecene, styrene, α-methylstyrene, o-methylstyrene, 2,4-dimethylstyrene, 2,4,5-trimethylstyrene, p-ethylstyrene, p-isopropylstyrene, p-isopropylα-methylstyrene, allylbenzene, vinylnaphthalene, acenaphthalene, 9-vinylanthracene, divinylbenzene and 1,2,4-trivinylcyclohexane;

halogen compounds like

vinylfluoride, vinylchloride, vinylbromide, fluorotrichloroethylene, 3-bromopropene-(1), 3-chloropropene-(1), 3-chloro-2-methylpropene-(1), chlorotrifluoroethylene, 1,1-dichloroethylene, 4-chlorostyrene, p-chloromethylstyrene, o-bromostyrene, 2-bromo-4-ethylstyrene, 2,4-dichlorostyrene, p-bromostyrene, o-chlorostyrene, m-chlorostyrene, β-chlorostyrene and 2,5-dichlorostyrene, vinylidene chloride;

acryl coumpounds like

acrylic acid, methacrylic acid, acrylamide, methacrylic acid amide, acrylonitrile, methacrylonitrile, acrolein , methacrolein ., acrylic acid chloride, N-tert-butylacrylamide, N-isopropylacrylamide, N-isopropylmethacrylamide, N-methylacrylamide, N-methylmethacrylamide, N,N-dimethylacrylamide, N-N-dimethylmethacrylamide, N-methylolacrylamide, N-methylolmethacrylamide, N-sulfomethylacrylamide, N-sulfomethylmethacrylamide, N-aminomethylacrylamide, N-aminomethylmethacrylamide, benzenediacrylic acid-(1,4), phenyldiacrylamide, phenyldimethacrylamide, N-dimethylaminopropylmethacrylamide, N-trimethylammoniumpropylmethacrylamide chloride, N,N-methylene bisarylamide, 2-chloroacrylonitrile, 2-acrylamido-propane sulfonic acid, 2-acrylamidopropane phosphonic acid, methylacrylate, methylmethacrylate, ethylacrylate, ethylmethacrylate, propylacrylate, isopropylmethacrylate,

BAD ORIGINAL

isobutylacrylate, n-butylacrylate, amylacrylate, n-hexylmethacrylate, cyclohexylmethacrylate, 2-ethylhexylmethacrylate, 2-ethylhexylacrylate, cyclohexylmethacrylate, 2-ethylhexylmethacrylate, 2-ethylhexylacrylate, cyclohexylacrylate, heptylacrylate, dodecylacrylate, octadecylacrylate, octylacrylate, n-butylmethacrylate, isobutylmethacrylate, decylmethacrylate, dodecylmethacrylate, octadecylmethacrylate, allylacrylate, allylmethacrylate, 2-dimethylaminoethylacrylate, 2-tert-butylaminoethylmethacrylate, 2,3-epoxypropylmethacrylate, 2-hydroxyethylmethacrylate, 2-hydroxypropylmethacrylate, ethylene glycol dimethacrylate, 2-hydroxyethylacrylate, 2-hydroxypropylacrylate, 2-ethyl-2(hydroxymethyl)-propanediol-(1,3)-trimethacrylate (trimethylolpropane triacrylate), glycidylmethacrylate, 2-ethoxyethylmethacrylate, 2-butoxymethylmethacrylate, ethyltriglycolmethacrylate, furfurylmethacrylate, 2-trimethylammonium ethylmethacrylate chloride, stearylmethacrylate, 2-methoxyethylacrylate, 2-butoxyethylacrylate, butane diol monoacrylate, butane diol diacrylate, hexane diol diacrylate, diethylaminoethylacrylate, dimethylaminoneopentylacrylate, ethyldiglycolacrylate, ß-phenoxy ethylacrylate, laurylacrylate, pentaerythritol triacrylate, pentaerythritol tetraacrylate, dihydrodicylopentadienylacrylate, vinylacrylate, triethylene glycol diacrylate, tetraethylene gylcol diacrylate, tripropylene glycol diacrylate, 3-methylpentane diol acrylate, ethylene glycol dimethacrylate, butane diol dimethacrylate, neopentyl glycol dimethacrylate, triethylene glycol dimethacrylate, allyl acrylate, dibromo propylacrylate, acryloyl glucose, methacryloyl glucose, acryloyl glucosamine, methacryloyl glucosamine, acryloyl maltose and methacryloyl maltose;

vinyl ethers like

vinyl methyl ether, vinyl ethyl ether, vinyl propyl ether, vinyl isobutyl ether, vinyl-2-ethylhexyl ether, vinyl octadecyl ether, butane diol divinyl ether, 4-vinylbenzyl glucose, 2-chloroethyl vinyl ether, butylvinyl ether, allyl-2,3-epoxypropyl ether and diethyleneglycol divinyl ether;

BAD ORIGINAL

0173517

Vinyl esters like

vinyl acetate, vinyl propionate, vinyl-2-ethyl hexanoate vinyl isobutyrate, vinyl benzoate, diallyl phthalate, divinyl terephthalate, vinyl naphthoate, allyl acetate, succinic acid-diallyl ester, adipic acid divinyl ester and ethyl hexanoicacid vinyl ester.

other vinyl compounds like

2-vinyl pyridine, 4-vinyl pyridine, N-vinyl-2-pyrrolidone, vinyl carbazole, 1-vinyl imidazole,2,4,6-tris(allyloxy)-1,3,5-triazine, 1,3,5-triacryloyl hexahydro-1,3,5-triazine, triethoxyvinyl silane, vinyl siloxane, methyl vinyl ketone, 2-methylpropene-(2)-Ol-(1), 3-methyl crotonic acid nitrile, diallyl amine, diallyl sulfide, divinyl sulfone, allyl alcohol, allyl amine, allyl cyanide,N-allyl urea, allyl isothiocyanate, N-allyl thiourea, vinylmethyl acetamide, vinyl sulfonic acid, maleic acid anhydride, maleic acid, fumaric acid, divinyl ethylene urea, divinyl propylene urea, itaconic acid, vinyl furane,α-vinyl thiopene, sodium-p-styrene sulfonate, vinyl isocyanate.

In the process of the invention the degree of substitution of the maltosaccharide derivative may vary within broad limits. Experience has shown that fully satisfactory to excellent results are achieved even with relatively low degrees of substitution ranging from 0.01 to 1.0 and preferably 0.02 to 0.1.

Although graft polymerization according to the process of this invention may be carried out using other reaction systems as well, experience has shown that it is preferably accomplished in a liquid medium which may be single- or multi-phase and may consist of polar and/or non-polar liquids. Frequently the liquid reaction medium may advantageously consist fully or partially of the mono- and/or oligomer(s) to be grafted.

Graft polymerization according to the emulsion polymerization method often is of particular advantage as it offers extraordinarily high flexibility in selecting the starting materials and processs conditions; the advantages of this polymerization method are particularly evident when grafting with different monomers.

Of the various possibilities available for producing polymerization initiation radicals from maltosaccharide derivatives of formula I, catalytic initiation of the decomposition, in which nitrogen is split off, is frequently preferable. Here the use of copper, copper (I) salts, iron alloys and/or iron (II) salts as decomposition catalysts have proved to give particularly good results, expecially as these are known from experience to have the additional effect of suppressing or preventing practically completely the formation of free radicals which otherwise may occur, at least to a minor extent, if conditions are unfavorable.

Although the molar ratio at which the maltosaccharide derivatives of formula I and the mono- and/or oligomers to be grafted may be used in the process of the invention may in general advantageously be selected freely from within a very broad range, experience has shown that it is preferable to choose a range between 10:1 and 1:15 preferably 2:1 and 1:15.

BAD ORIGINAL

While it is generally not necessary for the purposes of the invention to exclude oxygen from the surrounding air, such exclusion is frequently of advantage. A preferred embodiment of the invention therefore provides a method for carrying-out graft polymerization in an inert gas, in particular a nitrogen atmosphere.

The process of the invention advantageously provides a method for producing saccharide graft polymers in which the proportion of graft polymers (grafting degree) may be selected freely within extremely broad limits; the graft polymerization reaction is preferably continued until the proportion of grafted polymer in the saccharide graft polymer is 1 to 99 w/w %.

The process of the invention may be carried out not only batchwise but also continuously, which is of advantage for production on an industrial scale.

A particularly important advantage of the process of the invention lies in the fact that the backbone saccharide may, if desired, be grafted step by step with different monomers or monomer combinations and/or under different polymerization conditions and/or may be chemically modified, e.g. by enzymatic degradation with amylases, without modifying graft branches that have been attached in the (a) preceding graft polymerization step, which is achieved in that at first only part of the--existing or potential--moieties of the formula - R - NX are converted into polymerization initiation radicals and grafted.

The individual steps of graft polymerization may be carried out in one and the same reactor or in separate places as well as in immediate succession (in fact, they may even merge into each other or, e.g. when applying the emulsion polymerization method, may be parallel in time), or else in separate places and/or at different times, a large variety of ways being availabe for carrying out the individual steps.

A relatively simple example of a way in which the stepwise grafting may be carried out is using maltosaccharide derivatives with diazotizable amino groups which are partially diazotized in situ (with diazotizing agents present in substoichiometric amounts) and converted into graft polymerization initiation radicals.

BAD ORIGINAL

Another embodiment comprises using maltosaccharide derivatives with two or more types or, optionally in situ generated, substituents of the formula - R - NX of different stability, e.g. azo and diazonium groups, or maltosaccharide derivatives having two or more types of groups which are convertible under different conditions into polymerization initiation radicals, e.g. azo groups and diazotizable amino groups, so as to first initiate thermally and/or catalytically the decomposition of the azo groups.

Another possibilitiy to be mentioned here is that of reducing in maltosaccharide derivatives of formula I, in which X stands for - N - R' - Ms' or together with R and N forms a heterocyclic group of formula V, part of the azo groups to amino groups using, e.g., an alkali dithionite (in substoichiometric amounts) and after that proceeding as described above.

Stepwise grafting may also be carried out in that a graft polymer obtainable according to the process of the invention is again converted into a maltosaccharide derivative of general formula I and grafted. An example of this embodiment is the reaction of a saccharide graft polymer obtainable according to the invention with free aldehyde and/or keto groups in the manner described above to form an azine which is then further reacted to form an azo-group-containing maltosaccharide derivative for formula I.

The examples given below serve to illustrate the invention.

For better comparison of the examples as far as influences of different process parameters are concerned, a starch anthranilate was used as starting material for the maltosaccharide derivative of formula I, which was prepared as follows:

Isatoic acid anhydride was introduced to a dispersion of native corn starch in distilled water at a temperature of 54°C and a pH of 8.5 to 9.0 over 30 minutes. While the reagent was added and during the two-hour reaction time the pH-value was constantly checked and kept at 8.5 to 9.0. The reaction product was then filtered off, washed with distilled water and dried in vacuum. This was followed by a 24-hour Soxhlett extraction with ethanol and drying at 70°C. The amounts of starting materials and the degrees of substitution of the starch anthranilates are given in Table I.

BAD ORIGINAL

The grafting degrees were determined according to the following equation:

$$\text{Grafting degree \%} : \frac{\text{g graft polymer} - \text{g maltosaccharide derivative}}{\text{g graft polymer}} \cdot 100$$

The conversion rates were determined according to the following equation:

$$\text{Conversion rate \%} = \frac{\text{g crude polymer} - \text{g maltosaccharide derivative}}{\text{g monomers used}} \cdot 100$$

Table I

Reaction conditions for the preparation of starch anthranilates

| Starch anthranilate No. | I | II | III | IV | V | VI | VII | VIII | IX | X |
|---|---|---|---|---|---|---|---|---|---|---|
| Corn starch SIRONA (g) | 103,9 | 155,8 | 155,8 | 623,2 | 623,2 | 623,2 | 623,2 | 623,2 | 623,2 | 623,2 |
| dist. water ($cm^3$) | 250 | 375 | 375 | 1500 | 1500 | 1500 | 1500 | 1500 | 1500 | 1500 |
| Isatoic acid anhydride (g) | 8 | 6 | 12 | 24 | 24 | 12 | 48 | 12 | 12 | 72 |
| Nitrogen content prod. (%) | 0,428 | 0,324 | 0,557 | 0,233 | 0,240 | 0,124 | 0,503 | 0,128 | 0,114 | 0,770 |
| Degree of substitution* (D.S.) | 0,052 | 0,039 | 0,068 | 0,027 | 0,028 | 0,015 | 0,061 | 0,015 | 0,013 | 0,095 |

* Determined via nitrogen content: molecular weight of the anthranilate group: 120 g/mole)

$$D.S. = \frac{\%\ N\ 162}{1400 - (120 - 1)\ \%N}$$

Example 1

Starch graft polyacrylic acid (St-g-PAAc)

32.75 g (dry substance) of starch anthranilate with a degree of substitution (D.S.) of 0.095 was dispersed in a reaction vessel equipped with agitator, thermometer, reflux condenser and drip funnel in 350cm3 of degassed water and adjusted with HCl to a slightly acid pH-value. The dispersion was continuously flushed with nitrogen and cooled down to 0-5°C. Then 0.051g of sodium nitrite dissolved in 20 $cm^3$ of degassed water was added drop by drop. After diazotizing, 43.2 g of acrylic acid and 0.020 g of Cu(I)Cl were added and the temperature was adjusted to 50°C. After a reaction time of four hours the batch was cooled down to 20°C and the product precipitated in 3,000 $cm^3$ of a mixture of acetone and petroleum ether (4:1). The precipitate was filtered off, thoroughly washed with precipitating agent and dried in vacuum at 30°C.

| | |
|---|---|
| Yield: | 40.7 g (dry substance) |
| Grafting degree: | 19.5 % |

Example 2

(Influence of starch anthranilate D.S. on grafting degree)

Graft reactions were first carried out with starch anthranilates featuring different degrees of substitution to determine the influence of the degree of substitution on the grafting degree. The diazotizing reaction took place at a pH-value of 3 with excess nitrite not being removed. During the grafting reaction nitrogen was introduced through a metal pipe. The reaction period was four hours at 50°C. Where batches solidified during this time (breakdown of agitator), the product was precipitated after a further hour of reacting without stirring. Precipitation took place in methanol.

Table II shows the conditions and grafting degrees when using two different starch anthranilates. With the same diazotizing degree, there were hardly any variances in the drafting degrees. In other words, at a given degree of diazoting (amount of $NaNO_2$) the substitution degree of the starch anthranilate had no influence on the grafting degree. The results also suggest good diazotizing conditions and good reproducibility of the graft copolymerization.

BAD ORIGINAL

D.S. influence of the starch anthranilate on the grafting degree

| EXPERIMENT NO | | 1 | 2 | 3 | 4 | 5 | 6 | 7 |
|---|---|---|---|---|---|---|---|---|
| Starch anthranilate | D.S.<br>mole | 0,0149<br>0,2 | 0,061<br>0,2 | 0,0149<br>0,2 | 0,0149<br>0,2 | 0,061<br>0,2 | 0,061<br>0,2 | 0,015<br>0,2 |
| Acrylamide | mole | 0,6 | 0,6 | 0,6 | 0,6 | 0,6 | 0,6 | 0,6 |
| Sodium nitrite | mole | 0,00298 | 0,003 | 0,00074 | 0,00074 | 0,00074 | 0,00037 | 0,00037 |
| Copper(I)chloride | mole | 0,0002 | 0,0002 | 0,0002 | 0,0002 | 0,0002 | 0,0002 | 0,0002 |
| Temperature | °C | 50 | 50 | 50 | 50 | 50 | 50 | 50 |
| Polymerization time | h | 4,5 | 4 | 2 | 2 | 4 | 3 | 2,5 |
| Yield | g | 36,2 | 42,3 | 60,4 | 69,6 | 75,3 | 72,3 | 71,6 |
| Dry substance | % | 93,3 | 93,4 | 93,2 | 93,6 | 96,7 | 93,7 | 93,2 |
| Nitrogen content (graft pr.) | % | 3,44 | 3,63 | 9,4 | 10,5 | 10,21 | 9,8 | 9,8 |
| Conversion rate<br>Grafting degree | %<br>% | 16,2<br>17,5 | 15,7<br>17,0 | 68,3<br>47,0 | 85,5<br>52,7 | 77,6<br>50,3 | 82,1<br>51,7 | 79,6<br>50,9 |



BAD ORIGINAL

Influence of diazotizing degree on grafting degree

Table II further shows that a rise in the diazotizing degree (amount of $NaNO_2$) and thus an increase in the number of grafting sites leads to a decrease in grafting degree. This is in contradiction to the experience in radical polymerization which said that an increase in radical concentration results in a higher growth rate $v_W$ and a higher rate of conversion to polymer within a given time.

Possible causes for the opposite behavior observed here may be the following:

- No complete diazotization due to excessively high pH-value. Influence of excessive nitrite on graft reaction.
- The higher amount of $NaNO_2$ used for diazotizing, the higer pH-value in the actual graft reaction, since the diazotizing reaction consumes hydrogen ions.
- The higher diazotizing degree makes the possibility of intraor intermolecular cross-linking more likely, which could accelerate the chain fracture.

Example 3

(Influence of pH-values in diazotizing and grafting on the grafting degree)

To find out which parameters influence the graft reaction, graft reactions were accomplished according to the following chart:

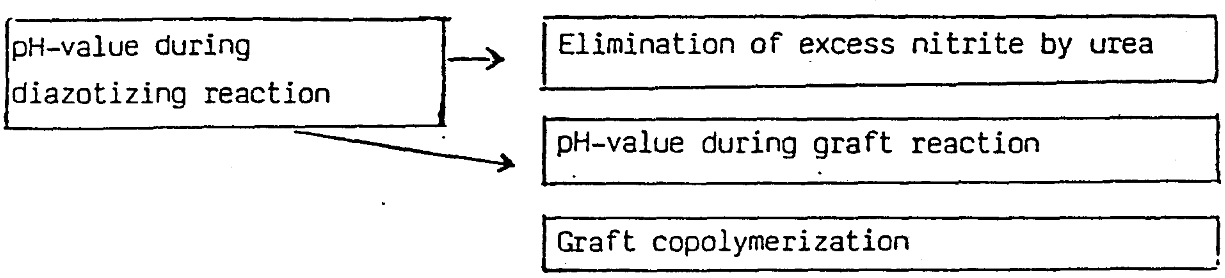


Diazotizing reactions were carried out at pH-values of 1 and 3, graft reactions at pH-values of 1.9, 4.1 and 6.5. Each combination was applied once with urea being added to eliminate excess nitrite and once without adding urea. The results of these tests are shown in Table III.

BAD ORIGINAL

T a b l e   I I I

Influence of pH-value in diazotizing and grafting of nitrite elimination on grafting degree

| EXPERIMENT NO | WITH UREA<br>WITHOUT UREA | 8<br>9 | 10<br>11 | 12<br>13 | 14<br>1 | 15<br>16 | 17<br>18 |
|---|---|---|---|---|---|---|---|
| Starch anthranilate (D.S. = 0,015) | | 0,2 | 0,2 | 0,2 | 0,2 | 0,2 | 0,2 |
| Acrylamide | mole | 0,6 | 0,6 | 0,6 | 0,6 | 0,6 | 0,6 |
| Sodium nitrite | mole | 0,003 | 0,003 | 0,003 | 0,003 | 0,003 | 0,003 |
| Copper(I)chloride | mole | 0,0002 | 0,0002 | 0,0002 | 0,0002 | 0,0002 | 0,0002 |
| Temperature | °C | 50 | 50 | 50 | 50 | 50 | 50 |
| Polymerization time | h | 4 | 4 | 4 | 4 | 4 | 4 |
| pH-value | in diazotizing | 1,0 | 3,0 | 1,0 | 3,0 | 1,0 | 3,0 |
| | in grafting | 6,5 | 6,5 | 4,1 | 4,1 | 1,9 | 1,9 |
| Grafting degree (%) | with urea | 41,7 | 3,2 | 40,2 | 5,4 | 24,1 | 52,0 |
| | without urea | 6,1 | 2,0 | 21,6 | 17,5 | 34,4 | 25,4 |

A cross-linking reaction of diazotized starch anthranilate subjected to the graft reaction conditions in the absence of monomers may be ruled out, because no gelling as a result of inter- and intramolecular cross-linking of the starch chains via the radical sites and no discoloration (azo linkage) were observed.

Example 4

(Influence of metal and metal sites on grafting degrees)

The influence of metal on graft copolymerization was investigated by introducing the nitrogen once through a pipe made of metal (stainless steel) and once through a pipe made of glass. The results in terms of grafting degree are shown in Table IV. When glass pipes were used, conversion rates and grafting degrees were invariably low, whereas with metal pipes grafting degrees were high and graft copolymerization was accomplished even in the absence of CuCl. it may be that the metal has the effect of catalyzing the decomposition of the diazonium salt.

Tale V reflects the influence of CuCl on the grafting degree. In the absence of CuCl, mopnomer conversion into polymer is distinctly lower than in the presence of the monovalent copper salt. The result suggests that the decomposition of the diazonium groups is significantly catalyzed by the metal salt. Besides, the influence of homopolymer, which in the absence of $Cu^+$ could have been formed by initiation of the chlorine atom may simulate an even higher conversation rate.

BAD ORIGINAL

Table IV

Influence of pipe for feeding nitrogen (diazotizing at pH 3)

| EXPERIMENT NO | | 19 | 7 | 20 | 21 | 22 | 23 |
|---|---|---|---|---|---|---|---|
| Starch anthranilate | D.S.<br>mole | 0,015<br>0,2 | 0,015<br>0,2 | 0,061<br>0,2 | 0,061<br>0,2 | 0,061<br>0,2 | 0,061<br>0,2 |
| Acrylamide | mole | 0,6 | 0,6 | 1,0 | 1,0 | 0,3 AAm<br>0,3 AAc | 0,3 AAm<br>0,3 AAc |
| Amount of solvent | $cm^3$ | 350 | 350 | 350 | 350 | 350 | 350 |
| Sodium nitrite | mole | 0,00037 | 0,00037 | 0,00037 | 0,00037 | 0,00037 | 0,00037 |
| Copper(I)chloride | mole | 0,0002 | 0,0002 | 0,0002 | 0,0002 | 0,0002 | - |
| Temperature | °C | 50 | 50 | 50 | 50 | 50 | 50 |
| Polymerization time | h | 4,0 | 2,5 | 2 | 4 | 4 | 4 |
| Yield | g | 33,2 | 71,6 | 107,4 | 41,0 | 54,1 | 59,1 |
| Dry substance | % | 95,6 | 93,2 | 93,0 | 89,4 | 90,5 | 96,7 |
| Nitrogen content (graft pr.) | % | - | 9,80 | 12,4 | 2,2 | - | 3,52 |
| Pipe for feeding nitrogen | | glass | metal | metal | glass | glass | metal |
| Conversation rate<br>Grafting degree | %<br>% | -<br>- | 79,6<br>50,6 | 94,4<br>61,1 | 5,5<br>10,7 | 37,7<br>33,1 | 56,8<br>42,7 |



BAD ORIGINAL

Influence of CuCl (diazotizing at pH 3, 350 $cm^3$ solvent)

| EXPERIMENT NO | | 6 | 7 | 24 | | 25 | 26 |
|---|---|---|---|---|---|---|---|
| Starch anthranilate | D.S.<br>mole | 0,061<br>0,2 | 0,015<br>0,2 | 0,015<br>0,2 | | maltodextrine<br>0,056<br>0,2 | anthranilate<br>0,056<br>0,2 |
| Acrylamide | mole | 0,6 | 0,6 | 0,6 | | - | - |
| Acrylic Acid | mole | - | - | - | | 0,6 | 0,6 |
| Sodium nitrite | mole | 0,00037 | 0,00037 | 0,00037 | | 0,00037 | 0,00074 |
| Copper(I)chloride | mole | 0,0002 | 0,0002 | - | | - | 0,0002 |
| Temperature | °C | 50 | 50 | 50 | | 50 | 50 |
| Polymerization time | h | 3 | 2,5 | 3 | | 5 | 4 |
| Yield | g | 72,3 | 71,6 | 56,0 | | 38,5 | 61,7 |
| Dry substance | % | 93,7 | 93,2 | 95,2 | | 91,6 | 91,8 |
| Nitrogen content (graft pr.) | % | 9,80 | 9,80 | 8,5 | | - | - |
| Pipe for feeding nitrogen | | metal | metal | metal | | glass | metal |
| Conversion rate<br>Grafting degree | %<br>% | 82,1<br>51,7 | 79,6<br>50,9 | 48,1<br>38,5 | | 4,8<br>7,2 | 53,7<br>40,1 |

Example 5

(Influence of temperature on graft copolymerization)

A lowering of the temperature applied during polymerization led to a decrease in the decomposition rate of the diazonium groups. Under stationary conditions this caused a reduction in radical concentration. Table VI depicts two tests performed at 25 and 50°C. Under identical grafting conditions the conversion rate and the grafting degree were distinctly lower at 25°C than at 50°C. To obtain the same conversion rates it would be necessary to prolong the polymerization time at 25°C.

Example 6

(Influence of monomer concentration)

When selecting a constant diazotizing degree and increasing the ratio of acrylamide to starch it can be expected that with the number of graft sites remaining constant the molecular weight of the graft branches will rise. Table VII shows the results of some graft copolymerizations. In grafting test 20 it is noted that already after two hours the conversion rate was very high and the maximun attainable grafting degree had almost been reached.

Table VI

| EXPERIMENT NO | | 5 | 27 |
|---|---|---|---|
| Starch anthranilate | D.S.<br>mole | 0,061<br>0,2 | 0,061<br>0,2 |
| Acrylamide | mole | 0,6 | 0,6 |
| Sodium nitrite | mole | 0,00074 | 0,00074 |
| Copper(I)chloride | mole | 0,0002 | 0,0002 |
| Temperature | °C | 50 | 25 |
| Polymerization time | h | 4 | 4 |
| Yield | g | 75,3 | 49,0 |
| Dry substance | % | 96,7 | 95,9 |
| Nitrogen content (graft pr.) | % | 10,21 | 6,1 |
| Conversion rate<br>Grafting degree | %<br>% | 77,6<br>50,3 | 31,7<br>30,0 |

Table VII

Influence of monomer concentration (diazotizing at pH 3: feed pipe made of metal)

| EXPERIMENT NO | | 6 | 7 | 20 | 28 | | 29 |
|---|---|---|---|---|---|---|---|
| Starch anthranilate | D.S.<br>mole | 0,061<br>0,2 | 0,015<br>0,2 | 0,061<br>0,2 | 0,015<br>0,2 | | 0,061<br>0,1 |
| Acrylamide | mole | 0,6 | 0,6 | 1,0 | 1,4 | | 1,5 |
| Amount of solvent | $cm^3$ | 350 | 350 | 350 | 350 | | 1000 |
| Sodium nitrite | mole | 0,00037 | 0,00037 | 0,00037 | 0,00037 | | $7,25.10^{-5}$ |
| Copper(I)chloride | mole | 0,0002 | 0,0002 | 0,0002 | 0,0002 | | 0,0002 |
| Temperature | °C | 50 | 50 | 50 | 50 | | 50 |
| Polymerization time | h | 3 | 2,5 | 2 | 4 | | 4 |
| Yield | g | 72,3 | 71,6 | 107,4 | 112,5 TS | | 97,9 |
| Dry substance | % | 93,7 | 93,2 | 93,0 | 88,0 | | 97,5 |
| Nitrogen content (graft pr.) | % | 9,80 | 9,8 | 12,4 | 13,61 | | 15,3 |
| Conversion rate<br>Grafting degree (add-on) | %<br>% | 71,2<br>48,1 | 79,6<br>50,9 | 94,4<br>61,1 | 80,1<br>70,9 | | 74,2<br>82,8 |
| Maximum attainable grafting degree % | | 56,6 | 56,6 | 68,4 | 75,2 | | 86,7 |

Example 7

(Graft copolymerization of St-g-PAAc as in Example 1 with acrylamide)

32.75 g of St-g-PAAc was dispersed in 1,800 $cm^3$ of degassed water and adjusted with HCL to a pH of 3. The dispersion was then cooled down to 0 - 5°C under continuous washing with nitrogen. Then 0.051 g of $NaNO_2$ dissolved in 25 $cm^3$ of degassed water was added drop by drop. After diazotizing 106.62 g of acrylamide and 0.020 CuCl were added and the temperature was raised to 50°C. After a reaction time of four hours the reaction mixture was cooled down to 20°C, the product precipitated in 8,000 $cm^3$ of acetone-petroleum ether (4:1), filtered off, thoroughly washed with precipitating agent and dried in vacuum at 30°C.

| | |
|---|---|
| Yield: | 44.4 g (dry substance) |
| Grafting degree: | 30.7 % based on polyacrylamide |
| | 40.6 % based on total mount of synthetic polymers (PAAm and PAAc) |

The grafted synthetic material consisted of 35.2 mole % acrylic acid and 64.8 mole % acrylamide. The nitrogen content of the product was 7.04 %.

Example 8

(Determination of homopolymer)

Starch graft polyacrylamide (St-g-PAAm)

In a reaction vessel equipped with agitator, thermometer, reflux condenser and drip funnel 33,0 g (dry substance) of starch anthranilate with a degree of substitution of 0.027 was dispersed in 200 $cm^3$ of degassed water. The dispersion was adjusted with HCl to a pH of 3. The batch was continuously washed with nitrogen and cooled down to 0 - 5°C. Then 0.207 g of sodium nitrite dissolved in 40 $cm^3$ of degassed water was added drop by drop. After diazotizing, a little urea was mixed in and the pH-value was adjusted with HCl to 1.9. Then 42.65 g of acrylamide dissolved in 150 $cm^3$ of degassed water and 0.020 g of Cu(I)Cl were added and the temperature was raised to 50°C.

BAD ORIGINAL

After a reaction time of four hours the reaction mixture was cooled down to 20°C and the product precipitated in 3,000 $cm^3$ of methanol. The precipitate was filtered off, thoroughly washed with methanol and dried in vacuum at 30°C.

The product was extracted with water. The proportion soluble in cold water was 6.7 % of graft product used. The determination of the nitrogen content and the IR spectrum of the soluble proportion revealed that the latter consisted 70 % of polyacrylamide. In the IR spectrum no absorption suggesting the presence of a carboxylic acid group (partial saponification of the polyacrylamide) was observed.

| | |
|---|---|
| Yield: | 64 g graft polymer (St-g-PPAm) |
| Grafting degree: | 48.6 % |
| Homopolymer: | 3.2 g (or 4.7 %) |

Comparison tests (as examples)

Two graft products were made according to conventional grafting methods. Conditions and results are shown in Table VIII. The homopolymer proportions were determined as in Example 8.

Table VIII

Results of graft polymerization according to known methods

| | | | |
|---|---|---|---|
| Corn starch | mole | 0.2 | 0.2 |
| Acrylamide | mole | 0.6 | 0.6 |
| Initiator | mole | 0.002 cerium ammonium nitrate | 0.002 $H_2O_2$<br>0.0002 iron ammonium sulfate |
| Water | $cm^3$ | 350 | 350 |
| Temperature | °C | 25 | 25 |
| Reaction time | h | 4 | 2 |
| Grafting degree | % | 17.2 | 20.5 |
| Homopolymer | % | 26.0 | 45.0 |

From these results it is evident that the amounts of homopolymer obtained by the process of the invention are negligible, whereas other methods yield homopolymer in substantial portions.

BAD ORIGINAL

Example 9

33.95 g (dry substance) starchanthranilate (D.S. 0.065) were dispersed in 200 $cm^3$ degassed water in a reaction vessel provided with a stirrer, thermometer, reflux-condenser and dropping funnel. There were then added 42.65 g acrylamide, dissolved in 150 $cm^3$ degassed water, and 0.02 g Cu (I) Cl. The pH of the reaction solution was adjusted with hydrochloric acid to 3.5 and the temperature raised to 50°C. The reaction system was flushed with nitrogen and a solution of 0.025 g sodium nitrite in 15 $cm^3$ water slowly added dropwise. After four hours reaction time the graft polymer was precipitated in methanol. The precipitate was filtered off, washed well with methanol and dried in a vacuum at 30°C.

| | |
|---|---|
| Yield | 67.4 g dry solid |
| Grafting degree | 49.6 % |

Example 10

33.95 g (dry substance) starchanthranilate (D.S. 0.065) were dispersed in 600 $cm^3$ degassed water in a reaction vessel provided with a stirrer, thermometer, reflux-condenser and dropping funnel. The starchanthranilate was then gelatinised by maintaining the dispersion for one hour in a water bath. By the introduction of nitrogen the dispersion was cooled to 50°C and 42.65 g acrylamide dissolved in 150 $cm^3$ degassed water added together with 0.02 g Cu (I) Cl. The pH of the mixture was then adjusted to 3.5 by means of hydrochloric acid followed by the slow, dropwise addition of 0.025 g sodium nitrite dissolved in 15 $cm^3$ water. After 4 hours reaction time the graft polymer was isolated and purified as described in Example 9.

| | |
|---|---|
| Yield | 71.8 g dry substance |
| Grafting degree | 52.8 % |

BAD ORIGINAL

Example 11

Grafting of a hydrophobic monomer i.e. vinyl acetate onto starch.

34.7 g (dry substance) starchanthranilate were dispersed in 350 $cm^3$ absolute ethanol in a reaction vessel provided with a stirrer, thermometer, reflux-condenser and dropping funnel. The dispersion was next carefully mixed with 3.4 g concentrated sulphuric acid and cooled to 0°C. 2.5 g Isoamylnitrite was next added while the temperature was held between 0 and 5°C. After 15 minutes reaction time 86 g vinyl acetate were slowly added and the temperature raised to 50°C. The period of reaction lasted 4 hours. The product was filtered off, washed with ethanol and dried in a vacuum at room temperature.

| | |
|---|---|
| Yield | 41.9 g dry substance |
| Grafting degree | 17.2 % |

Example 12

Example 11 was repeated replacing the ethanol by water-free acetone as reaction medium.

| | |
|---|---|
| Yield | 41.9 g dry substance |
| Grafting degree | 17.3 % |

BAD ORIGINAL

## CLAIMS

1) A process for producing an essentially homopolymer-free saccharide graft polymer by radical polymerisation of an ethylenically unsaturated compound in the presence of at least one saccharide and at least one initiator which under polymerisation conditions is adapted to decompose to split off nitrogen so forming a radical which initiates the polymerisation, characterised in that the saccharide is a maltosaccharide covalently linked to a group containing an azo-radical or a diazo-radical which under the polymerisation conditions eliminates nitrogen to form a free radical which initiates the polymerisation and to which becomes attached an ethylenically unsaturated compound polymer chain.

2) A process according to Claim 1 characterised in that the maltosaccharide which is covalently linked to a group containing an azo-radical or a diazo-radical has the general formula

$$MS - R - NX \quad (I),$$

in which

MS means an optionally substituted and/or hydrogenated maltosaccharide group featuring at least two alpha-glucosidically linked saccharide units in the molecule,

R means a covalent single bond or a bivalent group of the general formula

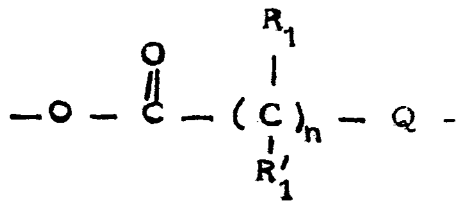 (II a),

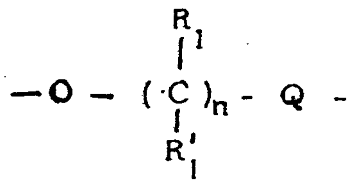 (II b)

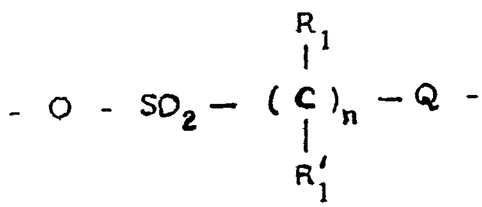 (II c),

in which

n is an integer from 0 to 17, $R_1$ and $R_2$ are the same or different, standing for H or a $C_{1-5}$-alkyl group or a phenyl group optionally substituted with Cl, F, Br, -CN, $-SO_3H$ or $-NO_2$, and Q is a bivalent group of the formula

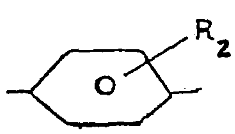 , 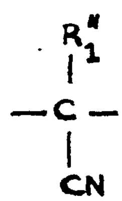 , 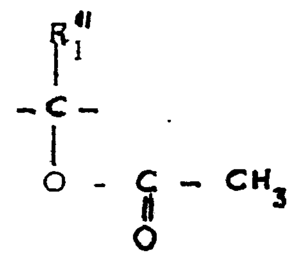

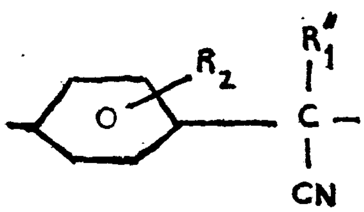 or 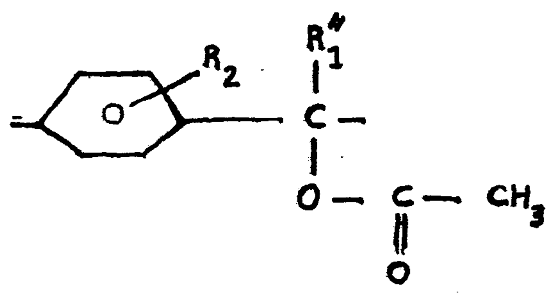

in which $R''_1$ may have one of the meanings given for $R_1$ and

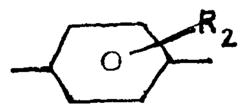

is a phenylene group optionally substituted with F, Cl, Br, -CN, $-SO_3H$ or $-NO_2$,

or the formula

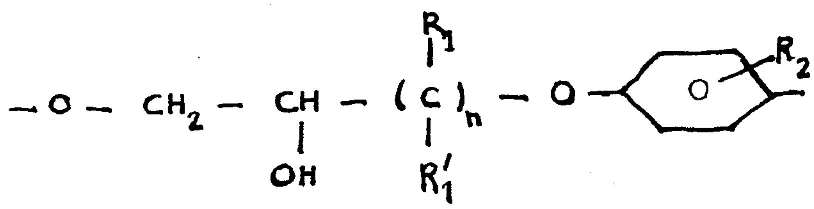

(II d),

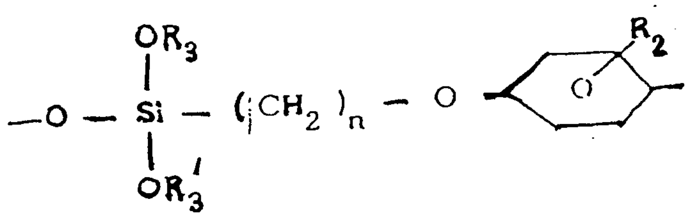

(II $e_1$)

or

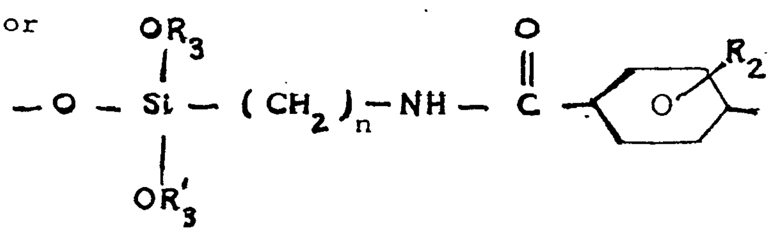

(II $e_2$),

in which $R_3$ and $R'_3$ are the same or different and mean a methyl or ethyl group,

or

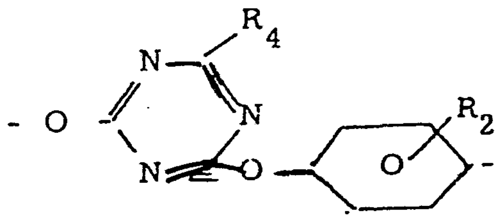

(II $f_1$)

or

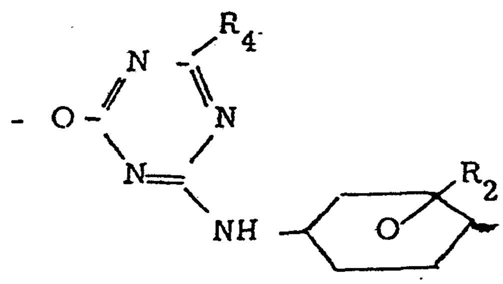

(II $f_2$),

in which $R_4$ stands for - $NHCH_2COOH$, $-OCH_2COOH$, -Cl, -F, -Br, $-NH_2$, - $NHCH_3$, $-N(C_2H_5O)_2$, - NH - 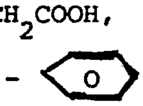 , - $OCH_3$, $-N(CH_3)\ CH_2CH_2OH$, - $N(CH_2CHOHCH_3)_2$, -N $(C_2H_5)_2$,

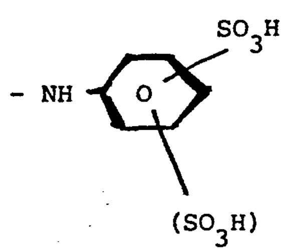

or a morpholine group,

N is a nitrogen atom

and

X stands for $\equiv N^+$ or a group of the formula

= N - R' - Ms ' (III),

in which R′ and Ms′ may be the same as or different from R and Ms respectively and may have one of the meanings given above for these groups,

or a group of the formula

= N - OZ (IV),

in which Z stands for H or a cationic counterion,

or

X together with R and N forms a heterocyclic group of the general formula

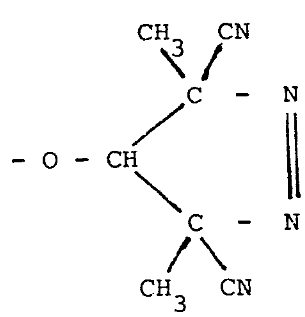

(V)

3) The process of Claim 1 or 2, characterised in that the maltosaccharide is derived from an oxidized and/or methyl-, ethyl-, hydroxymethyl-, hydroxyethyl-, hydroxypropyl-, carboxymethyl and/or acetyl-sustituted maltosaccharide, preferably from a starch modified in this manner or from its degradation product.

4) The process of any one of the preceding claims, characterised in that the maltosaccharide is derived from optionally modified, granular starch.

5) The process of any one of the preceding claims, characterized in that the maltosaccharide has an average degree of substitution of 0.01 to 1.0, preferably 0.02 to 0.1 (groups containing an azo radical per saccharide unit in the molecule).

6) The process of any one of the preceding claims, characterized in that the graft polymerization is carried out in the form of an emulsion polymerisation.

7) The process of any one of the preceding claims characterised in that the maltosaccharide polymerisation initiator radical is formed catalytically, using as catalyst preferably copper, copper (I) salts, iron alloys and/or iron (II) salts.

8) The process of any one of the preceding claims, characterised in that the molar ratio of maltosaccharide to ethylenically unsaturated compound is between 1 : 0.1 and 1 : 15.

9) The process of any one of the preceding claims, characterised in that graft polymerization is carried out stepwise, so as to convert in a first step part of the maltosaccharide into polymerization initiator radicals at which polymerisation takes place.

10) The process of any one of the preceding claims characterised in that the ethylenically unsaturated compound is a vinyl or vinylidene compound.